Europäisches Patentamt

European Patent Office

Office européen des brevets

(11) Veröffentlichungsnummer: **0 328 777 B1**

# (12) EUROPÄISCHE PATENTSCHRIFT

(45) Veröffentlichungstag der Patentschrift: **27.11.91**

(51) Int. Cl.⁵: **B01D 53/36**

(21) Anmeldenummer: **88121352.4**

(22) Anmeldetag: **21.12.88**

(54) Verfahren zum Entfernen von Stickoxiden aus Abgasen.

(30) Priorität: **29.12.87 DE 3744388**

(43) Veröffentlichungstag der Anmeldung:
**23.08.89 Patentblatt 89/34**

(45) Bekanntmachung des Hinweises auf die
Patenterteilung:
**27.11.91 Patentblatt 91/48**

(84) Benannte Vertragsstaaten:
**AT BE CH DE GB IT LI NL SE**

(56) Entgegenhaltungen:
**WO-A-85/03645**
**DE-A- 3 505 416**

(73) Patentinhaber: **BASF Aktiengesellschaft**
**Carl-Bosch-Strasse 38**
**W-6700 Ludwigshafen(DE)**

(72) Erfinder: **Agar, David, Dr.**
**Eichhornshoehe 37 a**
**W-6149 Rimbach(DE)**
Erfinder: **Ruppel, Wilhelm, Dr.**
**Koenbigsberger Strasse 13**
**W-6830 Schwetzingen(DE)**
Erfinder: **Hoelderich, Wolfgang, Dr.**
**Mannheimer Strasse 18 c**
**W-6710 Frankenthal(DE)**
Erfinder: **Drews, Ronald, Dr.**
**Pranckhstrasse 22**
**W-6700 Ludwigshafen(DE)**

## Beschreibung

Es ist bekannt, aus Abgasen, z.B. Feuerungsabgasen, Stickoxide durch selektive katalytische Reduktion mit Ammoniak zu entfernen. Dieses unter dem Namen SCR-Verfahren (Selective Catalytic Reduction) bekannt gewordene Verfahren hat zunehmend an technischer Bedeutung gewonnen. Bei diesem Verfahren wird praktisch der in den Abgasen enthaltene Sauerstoff nicht angegriffen und der Verbrauch an Ammoniak richtet sich allein nach dem Stickoxid-Gehalt der zu behandelnden Abgase.

Die für diese Umsetzung erforderlichen Katalysatoren enthalten katalytisch wirksame Mengen an Vanadium-, Molybdän- und/oder Wolframoxiden, die auf keramischen Trägern, wie Aluminiumoxiden, Titanoxiden und Silikaten aufgebracht sind (vgl. DE-C 2 458 888). Es ist auch bekannt, daß Zeolithe des Mordenittypes (US-A-3 895 094), des Faujasittypes (US-A-4 052 837) und des Clinoptilolithtypes (DE-A-3 000 363) als Katalysatoren herangezogen werden können.

Um den Druckverlust möglichst gering zu halten, werden keine stückigen Katalysatoren eingesetzt, sondern monolithische Katalysatoren, die in Richtung ihrer Längsachse mit einer Vielzahl von parallelen Kanälen durchzogen sind, wobei jeder Kanal von dem benachbarten Kanal durch eine Trennwand mit im wesentlichen einheitlicher Wandstärke abgegrenzt wird. Diese Katalysatoren werden auch als wabenförmige Katalysatoren bezeichnet (vgl. DE-C-2 658 539).

Das SCR-Verfahren wird so durchgeführt, daß dem zu behandelnden Abgas vor Eintritt in die den Katalysator enthaltende Reaktionszone Ammoniak entsprechend dem gewünschten $NO_x$-Reduktionsgrad zugemischt wird, wobei allerdings bei $NO_x$-Abscheidungsgraden von > 70 % es sich nicht vermeiden läßt, daß der Ammoniak nicht vollständig umgesetzt wird und somit das behandelte Abgas neben $NO_x$ auch nicht umgesetzten Ammoniak enthält, was gleichermaßen unerwünscht ist.

In der DE-C- 3 604 045 wird ein Verfahren beschrieben, bei dem Rauchgase über kohlenstoffhaltige Absorptionsmittel bzw. Katalysatoren geleitet werden, wobei die Ammoniakzugabe zum kontinuierlichen Rauchgasstrom in periodischen Intervallen zwischen einer hohen $NH_3$-Zugabemenge und einer niedrigen $NH_3$-Zugabemenge oder einer Zugabepause sprunghaft geändert wird. Durch diese Verfahrensweise soll die $NH_3$-Konzentration im Abgas hinter der Reaktionszone bei einem gewünschten hohen $NO_x$-Abscheidungsgrad wesentlich vermindert werden. Die Dosierung des Ammoniaks in das Abgas vor der Reaktionszone wird in Abhängigkeit von der am Ende der Reaktionszone gemessenen $NH_3$-Konzentration geregelt, wobei der Sollwert des $NO_x$-Abscheidungsgrades als Führungsgröße in die $NH_3$-Zugabemengen- und/oder Intervallängenregelung eingegeben werden kann. Das Verfahren ist jedoch beschränkt auf kohlenstoffhaltige Adsorptionsmittel und benötigt zu seiner Durchführung eine aufwendige Auslegung und ein kompliziertes Steuerungssystem.

In der DE-B-35 05 416 ist ein weiteres Verfahren zur selektiven katalytischen Reduktion von Stickoxiden durch Umsetzung mit einem Reduktionsmittel beschrieben, bei dem das Reduktionsmittel und die zu reduzierende Stickoxide enthaltenden Abgase periodisch alternierend mit dem Katalysator bzw. Abschnitten desselben in Berührung gebracht wird. Das Verfahren wird so durchgeführt, daß der Katalysator zunächst mit dem Reduktionsmittel beaufschlagt wird, wobei dieses in dem Katalysator gespeichert wird. Anschließend wird über den mit dem Reduktionsmittel beladenen Katalysator das zu reinigende, Stickoxide enthaltende Abgas in umgekehrter Strömungsrichtung geleitet und die Stickoxide durch das im Katalysator gespeicherte Reduktionsmittel reduziert. Bei diesem Verfahren baut sich im Katalysator ein in Strömungsrichtung des Reduktionsmittels gesehen abnehmendes Reduktionsmittel-Speicherprofil auf. Wird nun dieser Katalysator in umgekehrter Strömungsrichtung mit den zu behandelnden Abgasen beaufschlagt, so trifft das Abgas auf den Katalysatorteil mit geringen Speichermengen an Reduktionsmittel, d.h. hohen $NO_x$-Konzentrationen im Eingangsgas stehen geringe $NH_3$-Mengen zur Verfügung. An der der Eintrittsstelle gegenüberliegenden Austrittsstelle - in Abgasströmungsrichtung gesehen - liegen dagegen hohe $NH_3$-Konzentrationen vor und stehen einem bezüglich seines $NO_x$-Gehaltes bereits abgereicherten Abgas gegenüber. Hierbei kann nicht verhindert werden, daß Ammoniak durch das Abgas ausgestrippt wird und somit zu hohen $NH_3$-Schlupfwerten führt. Sofern das Reduktionsmittel enthaltende Gas kälter als das zu behandelnde Abgas ist, findet zwangsläufig ein Wärmeaustausch statt. Somit befindet sich nur ein begrenzter Teil der katalytischen Masse im richtigen Temperaturbereich für die SCR-Reaktion. Dies führt sowohl zu einer schlechten Ausnutzung des Katalysators als auch zu unerwünschten Nebenreaktionen (Bildung von Ammoniumhydrogensulfatniederschlägen).

Der vorliegenden Erfindung lag die Aufgabe zugrunde, ein Verfahren zum Entfernen von Stickoxiden aus Abgasen durch selektive Reduktion mit Ammoniak in einer Reaktionszone in Gegenwart von Katalysatoren bereitzustellen, wobei dem der Reaktionszone kontinuierlich zugeführten Abgasstrom der Ammoniak in Intervallen zugeführt wird, und das es gestattet, hohe $NO_x$-Abscheidungsgrade bei geringem Ammoniakschlupf auch bei schwankenden Lastbedingungen zu erzielen.

Es wurde gefunden, daß diese Aufgabe dadurch gelöst werden kann, daß man der Reaktionszone das Abgas periodisch wechselnd in entgegengesetzter Strömungsrichtung zuführt, wobei man zu Beginn jeder Periode das Abgas zusammen mit einer über die stöchiometrisch erforderlichen Menge an Ammoniak, die für die Reduktion der Stickoxide erforderlich ist, zuführt, die Ammoniakzufuhr abbricht, bevor nicht umgesetzter Ammoniak zusammen mit dem Abgas die Reaktionszone verläßt und die Strömungsrichtung der Abgase durch die Reaktionszone spätestens dann umkehrt, sobald der $NO_x$- und/oder $NH_3$-Gehalt in dem die Reaktionszone verlassenden Abgas einen jeweils vorbestimmten Sollwert überschreitet.

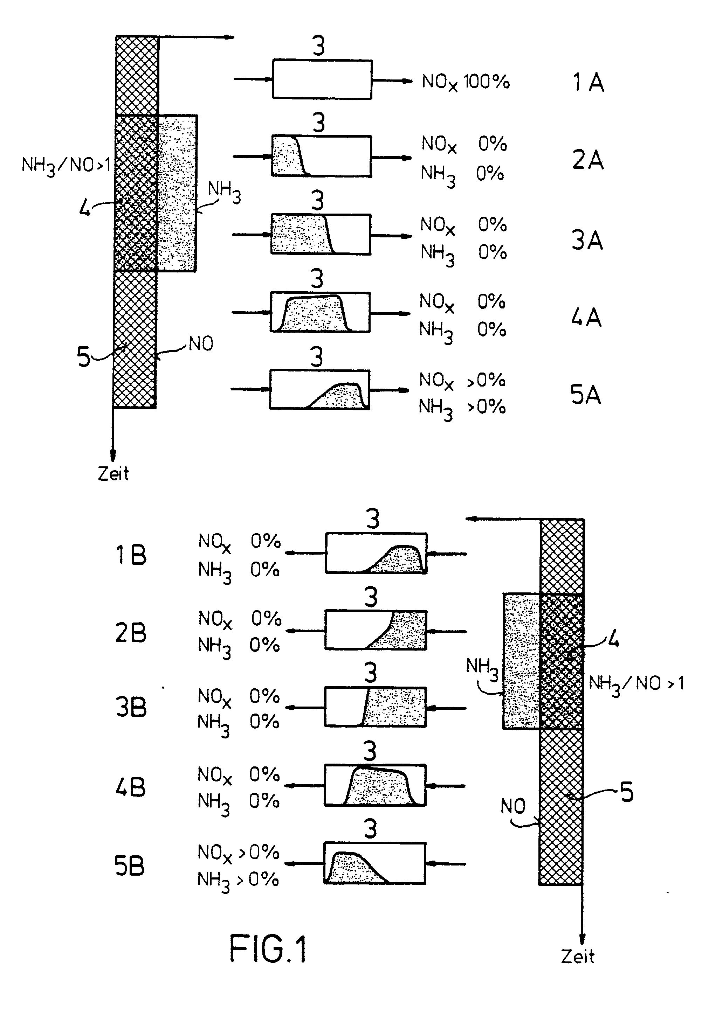

Das erfindungsgemäße Verfahren sei im folgenden anhand der schematischen Figur 1, die einen Zyklus aus 2 Perioden beschreibt, näher erläutert. Für jede Periode sind in der Figur fünf zeitlich voneinander getrennte Teilperioden 1A bis 5A (Periode 1) und 1B bis 5B (Periode 2) dargestellt. Bei Teilperiode 1A durchströmt das ammoniakfreie Abgas den mit Katalysator gefüllten Reaktor (3) bei Betriebstemperatur von links nach rechts. Die Menge des ammoniakfreien Abgases bleibt über sämtliche Teilperioden konstant, wie dies durch das Kästchen 5 veranschaulicht wird. Der $NO_x$-Gehalt des Abgases am rechten Ausgang des Reaktors bleibt gegenüber dem Eingangsgehalt naturgemäß unverändert, da das Eingangsgas keinen Ammoniak enthält. Zu Beginn der Teilperiode 2A wird dem Abgas eine überstöchiometrische Ammoniakmenge zugegeben, wie dies durch das Kästchen 4 im linken Koordinatensystem veranschaulicht wird. Dabei wird Ammoniak für die Reduktion des im Abgas enthaltenen $NO_x$ bei hoher Minderung des $NO_x$-Gehaltes verbraucht. Der nicht umgesetzte Ammoniak wird gleichzeitig am Katalysator adsorbiert, wobei die $NH_3$-Adsorptionsfront nach rechts wandert. Bei Teilperiode 3A wird dem Reaktor 3 weiterhin Abgas und Ammoniak zugeführt, wobei die Ammoniakadsorptionsfront weiter nach rechts wandert. Nach der Teilperiode 3A wird die Ammoniakzugabe unterbrochen, wobei jetzt das im Abgas enthaltene $NO_x$ durch der am Katalysator adsorbierte $NH_3$ reduziert wird, wobei gleichzeitig das am Katalysator adsorbierte Ammoniak sich "chromatographisch" durch Desorption und Adsorption in Strömungsrichtung durch das Katalysatorbett bewegt (Teilperiode 4A). Bei der Teilperiode 5A erreicht die Ammoniakadsorptionsfront den Reaktorausgang. Ab diesem Zeitpunkt tritt in zunehmendem Maße Ammoniak in dem austretenden, behandelten Abgas auf, andererseits beginnt dann auch der $NO_x$-Gehalt im abgehenden Abgas zu steigen. Am Ende dieser Teilperiode enthält der Katalysator noch eine unbekannte Ammoniakmenge mit undefiniertem Konzentrationsprofil. Um einen Ammoniakdurchbruch zu verhindern, wird nunmehr die Strömungsrichtung des Abgases durch den Reaktor (3) umgekehrt, wobei die Teilperioden 1B bis 5B (Periode 2) den oben genannten Teilperioden 1A bis 5A (Periode 1) entsprechen. Lediglich zwischen den Teilperioden 1A und 1B besteht insofern ein Unterschied, als am Reaktorausgang nunmehr auf der linken Seite kein $NO_x$ im abgehenden Abgas enthalten ist, da aus der vorhergehenden Teilperiode 5A noch genügend Ammoniak am Katalysator adsorbiert ist, um das $NO_x$ zu reduzieren. In der Zeichnung ist bei den Teilperioden 2A bis 5A und 1B bis 5B der $NO_x$-Gehalt im Abgas vereinfacht mit 0 % angegeben worden; selbstverständlich können hier auch höhere $NO_x$-Gehalte auftreten, falls dies gewünscht wird. Analoges gilt auch für den Ammoniakgehalt.

Nach Durchlaufen der Teilperiode 5B wird wiederum die Strömungsrichtung des Gases umgekehrt und der Zyklus beginnt von neuem.

Aus dem oben gesagten geht hervor, daß in jeder Periode die Ammoniakzufuhr unterbrochen wird, bevor die $NH_3$-Adsorptionsfront den jeweiligen - in Strömungsrichtung gesehen - Reaktorausgang erreicht, oder in anderen Worten, die Ammoniakretentionszeit bis zum Reaktorausgangmuss sehr viel größer gewählt werden als die Zeit zum Verbrauch des adsorbierten Ammoniaks in der vorderen Zone.

Als Parameter für die Steuerung des Verfahrens stehen die Dauer der Ammoniakzufuhr bzw. -unterbrechung sowie die Ammoniakkonzentration zur Verfügung. Grundsätzlich gibt es hierfür zwei Möglichkeiten:

1. Die Zeit der Ammoniakzufuhr und die Ammoniakkonzentration bleiben bei der Ammoniakbeladungsphase konstant. Der Reaktor wird so ausgelegt, daß bei diesen Parametern Ammoniak nicht durchbricht. Die Dauer der ammoniakzufuhrfreien Phase ist dagegen variabel und richtet sich nach dem am Reaktorausgang gemessenen Ammoniak- und/oder $NO_x$-Wert.

2. Die Dauer der Ammoniakbeladungsphase wird durch die Bestimmung der Ammoniakdurchbruchsfront entweder durch Ammoniakkonzentrations- oder Temperaturmessungen an symmetrisch angeordneten Stellen vor dem Reaktorausgang bestimmt. Die Analytik ist dabei wesentlich vereinfacht, da es genügt, Ammoniak im Bereich von etwa 1000 ppm zu messen. Die Dauer der ammoniakzufuhrfreien Phase findet über eine definierte Zeit statt.

Während die erste Möglichkeit meßtechnisch einfacher ist, bietet die zweite bessere mittlere $NO_x$-Umsatzwerte an. In beiden Fällen gestattet das erfindungsgemäße Verfahren eine flexible Anpassung an die jeweils vorherrschenden Betriebsbedingungen.

Als Katalysatoren für das erfindungsgemäße Verfahren kommen grundsätzlich alle für das SCR-

EP 0 328 777 B1

Verfahren bekannten Katalysatoren in Betracht, die eine hohe Speicherfähigkeit für Ammoniak von > 0.05 Gew.% aufweisen und bei denen die Adsorptionsgeschwindigkeit mindestens 5 mal so groß ist wie die Desorptionsgeschwindigkeit. Insbesondere geeignet sind Trägerkatalysatoren mit keramischen Trägern wie Aluminiumoxid, Titandioxid und Siliciumdioxid, auf die katalytisch wirkende Metalloxide der Übergangselemente, insbesondere Oxide des Vanadium, Chroms, Wolframs, Molybdäns und Eisens, aufgebracht sind. Geeignet sind auch Zeolithe, insbesondere Zeolithe des Faujasittyps, des Mordenittyps und des Pentasiltyps. Diese Zeolithe können auch mit Übergangsmetallen, wie z.B. Eisen oder Kupfer, dotiert sein. Auch Aktivkohle ist geeignet. Die Katalysatoren können eine beliebige Form aufweisen, z.B. Stränge oder Tabletten, besonders bevorzugt sind aber monolithische Wabenkörper mit einer Vielzahl in Richtung der Längsachse verlaufender paralleler Kanäle.

Für die Durchführung des Verfahrens können z.B. zylindrische Rohrreaktoren mit entsprechenden Möglichkeiten für die periodische Umlenkung des Gasstromes durch den Reaktor eingesetzt werden.

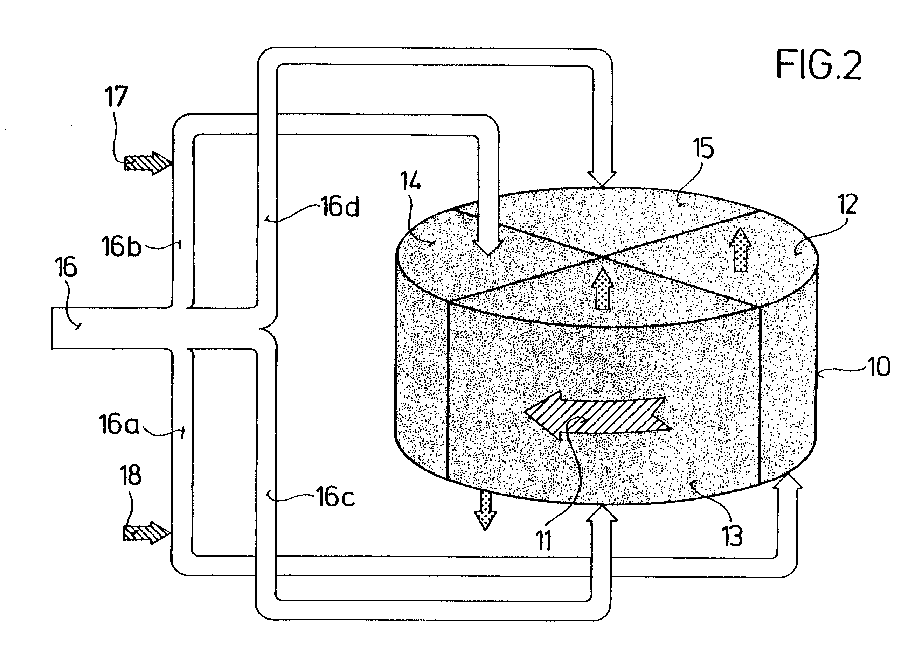

In Figur 2 ist ein in Richtung des Pfeiles 11 drehbarer zylindrischer Reaktor 10 schematisch dargestellt, der in vier Segmente geteilt ist, die jeweils mit einer ortsfesten Gaszufuhr und nicht gezeigten Gasabfuhr ausgestattet sind. Das zu behandelnde Rauchgas wird durch Leitung 16 zugeführt und in vier Teilströme 16a bis 16d zerlegt. Den Teilströmen 16a und 16b wird durch Leitungen 17 und 18 Ammoniak zugeführt. In der Figur werden die Segmente 12 und 13 von unten mit dem Abgas beaufschlagt, und zwar Segment 12 mit Ammoniak und Segment 13 ohne Ammoniak, während die Segmente 14 und 15 von oben beaufschlagt werden, und zwar Segment 14 mit und Segment 15 ohne Ammoniak. Bei einer Vierteldrehung des Reaktors in Pfeilrichtung wird nunmehr Segment 13, das vorher von unten mit Rauchgas ohne Ammoniak beaufschlagt worden ist, nunmehr von oben mit ammoniakhaltigem Rauchgas beaufschlagt unter Umkehrung der Gasströmungsrichtung in diesem Segment. Das umgekehrte gilt entsprechend für das Segment 15, während bei den Segmenten 12 und 14 die Strömungsrichtung beibehalten, jedoch die Ammoniakzuführung unterbrochen wird.

Bei dieser Reaktorkonstruktion sind die vier Phasen durch die Drehzahl miteinander gekoppelt, so daß die Begasungszeiten in jeder der vier Phasen gleich sind. Aus diesem Grunde muß bei diesem Reaktor zur Regelung das Molverhältnis $NH_3/NO$ herangezogen werden. Beispielsweise muß das Verhältnis erhöht werden, wenn der $NO_x$-Gehalt im Abgas steigt. Umsatzerniedrigungen durch Schlupfleckagen zwischen den einzelnen Sektoren lassen sich durch Einstellung der Druckverhältnisse in den einzelnen Sektoren oder durch Anwendung von mit Reingas gespülten Sperrzonen vermeiden.

Beispiel

Ein zylindrischer Reaktor ist mit einem Wabenkatalysator mit 4 x 4 in Längsrichtung parallel zueinander verlaufenden Kanälen versehen. Der Katalysator ist 30 cm lang und hat einen Querschnitt von 16 x 16 mm². Der Katalysator enthält 75,2 Gew.% $TiO_2$, 8,4 Gew.% $WO_3$ und 3,2 Gew.% $V_2O_5$.

Versuchsbedingungen:

| Gasmenge: | jeweils 100 Nl/h |
|---|---|
| Katalysatormenge: | 77 cm³ |
| Belastung: | 1300 $Nl/l_{Kat}xh$ |
| Temperatur: | 300 ˚C |
| Druck: | 1 bar |

In einem Vorversuch wurden die Adsorptions- bzw. Desorptionseigenschaften für $NH_3$ an dem genannten Katalysator untersucht. Dazu wird Gas B bei den oben erwähnten Versuchsbedingungen über den Katalysator geleitet. Nach 90 min erreicht $NH_3$ im Reaktorablauf die Nachweisgrenze (40 mg/Nm³). Nach weiteren 10 min ist die $NH_3$-Konzentration im Reaktorzulauf erreicht. Die Speicherkapazität des Katalysators beträgt somit 0,24 Gew.% und die Breite der Adsorptionsfront umfaßt ca. 1/9 der Katalysatorlänge. Damit ist das Verhältnis Adsorptionsgeschwindigkeit zu Desorptionsgeschwindigkeit ausreichend groß.

Anschließend an diesen Vorversuch wird der Katalysator zunächst mit einem Gas B und dann mit einem Gas A durchströmt.

Gas A hat die folgende Zusammensetzung:
Stickstoff mit 3 Vol.% $O_2$ und 2860 mg/Nm³ NO
Gas B hat die folgende Zusammensetzung:

4

EP 0 328 777 B1

Stickstoff mit 3 Vol.% $O_2$ und 910 mg/$Nm^3$ $NH_3$

Auf diese Weise werden die Teilperioden 2A und 3A, bzw. die Teilperioden 4A und 5A in Fig. 1 experimentell simuliert.

In den folgenden drei Versuchen wird der Katalysator zunächst vom Gas B durchströmt und 10 min, 15 min oder 30 min mit $NH_3$ beladen.

Die Vorgehensweise entspricht den Teilperioden 2A und 3A in Fig. 1, wobei Gas B den Ammoniaküberschuß im Rauchgasstrom simuliert. Im Reaktorablauf wurde kein $NH_3$ gefunden.

Danach wurde auf das Gas A umgeschaltet und die NO-Durchbruchskurve mit einem Chemiluminezgerät gemessen. Dieser Vorgang entspricht den Teilperioden 4A und 5A in Fig.1.

Die experimentell gefundenen NO-Durchbruchskurven sind durch einen steilen Anstieg der NO-Konzentration im Reaktorablauf charakterisiert. In einer Zeitspanne von weniger als einem Viertel der $NH_3$-Beladungszeit steigt die $NO_x$-Ablaufkonzentration von Null auf den Wert im Reaktorzulauf.

Die zu den verschiedenen $NH_3$-Beladungszeiten gehörigen NO-Durchbruchszeiten sind in folgender Tabelle dargestellt. Die Durchbruchzeit wird durch den Anstieg der NO-Konzentration auf 230 mg/$Nm^3$ definiert.

| $NH_3$-Beladungszeit $t_{NH3}$ | NO-Durchbruchzeit $t_{NO}$ | Verhältnis $t_{NO}/t_{NH3}$ |
|---|---|---|
| 30 min | 19 min | 63 % |
| 15 min | 9,5 min | 63 % |
| 10 min | 7 min | 70 % |

Bei gleicher Durchströmungsgeschwindigkeit des Reaktors bei der Beladung des Katalysators mit Ammoniak und der Entladung durch die SCR-Reaktion muß das Verhältnis NO-Durchbruchzeit zu $NH_3$-Beladungszeit gleich dem Verhältnis der Zulaufmengen an Ammoniak und Stickoxid sein (60 %).

Aufgrund der obigen Versuchsergebnisse kann z.B. bei gleichzeitiger Beaufschlagung des Katalysators mit einem $NO_x$-haltigen (2860 mg NO/$Nm^3$) und einem $NH_3$-haltigen Gas (2427 mg $NH_3$/$Nm^3$) gemäß Fig, 1. Teilperioden 2A und 3A, bei einem Molverhältnis $NH_3$/NO = 1,6 die Beaufschlagungszeit ca. 30 min betragen. Dazu wird die Zufuhr des ammoniakhaltigen Gases abgestellt und die SCR-Reaktion verbraucht gemäß den Teilperioden 4A und 5A innerhalb von ca. 19 min den auf dem Katalysator adsorbierten Ammoniak. Nach insgesamt ca. 49 min wird die Strömungsrichtung gewechselt und die Teilperioden 1B-5B schließen sich an.

## Patentansprüche

1. Verfahren zum Entfernen von Stickoxiden aus Abgasen durch selektive Reduktion mit Ammoniak in einer Reaktionszone in Gegenwart von Katalysatoren, wobei dem der Reaktionszone kontinuierlich zugeführten Abgasstrom der Ammoniak in Intervallen zugeführt wird, dadurch gekennzeichnet, daß man der Reaktionszone das Abgas periodisch wechselnd in entgegengesetzter Strömungsrichtung zuführt, wobei man zu Beginn jeder Periode das Abgas zusammen mit einer Menge an Ammoniak, die größer ist als für die Reduktion der Stickoxide stöchiometrisch erforderlich, zuführt, die Ammoniakzufuhr abbricht, bevor nicht umgesetzter Ammoniak zusammen mit dem Abgas die Reaktionszone verläßt und die Strömungsrichtung der Abgase durch die Reaktionszone spätestens dann umkehrt, sobald der $NO_x$- und/oder $NH_3$-Gehalt in dem die Reaktionszone verlassenden Abgas einen jeweils vorbestimmten Sollwert überschreitet.

## Claims

1. A process for removing nitrogen oxides from offgas by selective reduction using ammonia in a reaction zone in the presence of a catalyst, where ammonia is fed at intervals to the offgas stream fed continuously to the reaction zone, which comprises feeding the offgas to the reaction zone for alternating periods in opposite flow directions, the offgas, together with an amount of ammonia which is greater than stoichiometrically necessary for the reduction of the nitrogen oxides, being fed in at the beginning of each period, the supply of ammonia being cut off before unreacted ammonia leaves the reaction zone together with the offgas, and the flow direction of the offgas through the reaction zone being reversed at the latest when the $NO_x$ and/or $NH_3$ contents in the offgas leaving the reaction zone exceed a nominal value which is predetermined in each case.

5

**Revendications**

1. Procédé pour l'élimination d'oxydes toxiques de gaz résiduaires par la réduction sélective avec de l'ammoniac dans une zone de réaction, en présence de catalyseurs, conformément auquel on ajoute par intervalles de l'ammoniac au courant de gaz résiduaire amené en continu à la zone de réaction, caractérisé en ce que l'on alimente la zone réactionnelle en gaz résiduaire selon une direction d'écoulement périodiquement alternativement opposée, où, au début de chaque période, on amène le gaz résiduaire, en même temps qu'une proportion d'ammoniac qui est supérieure à celle stoechiométriquement nécessaire à la réduction des oxydes toxiques, on interrompt l'addition d'ammoniac avant que de l'ammoniac non converti quitte la zone de réaction en même temps que le gaz résiduaire et on inverse la direction d'écoulement du gaz résiduaire à travers la zone de réaction au plus tard quand la teneur en $NO_x$ et/ou en $NH_3$ dans le gaz résiduaire qui quitte la zone de réaction dépasse une valeur seuil prédéterminée dans chaque cas.

FIG.1

FIG.2